# EUROPÄISCHE PATENTANMELDUNG

(11) **EP 1 659 542 A1**
(43) Veröffentlichungstag der Anmeldung: **24.05.2006**
(21) Anmeldenummer: 05024466.4
(22) Anmeldetag: 09.11.2005
(51) Int. Cl.: G07C 9/00, B60R 25/00

(54) **Schließsystem für ein Fahrzeug**

(30) Priorität: 19.11.2004 DE 102004055982
(71) Anmelder: DaimlerChrysler AG, 70567 Stuttgart (DE)
(72) Erfinder: Bauer, Wolf-Dietrich, 70771 Leinfelden-Echterdingen (DE); Fischer, Roland, 61130 Nidderau (DE); Scholz, Rainer, 75378 Bad Liebenzell (DE)

(57) **Zusammenfassung**

Die Erfindung betrifft ein Schließsystem für ein Fahrzeug mit einer Steuereinheit zur Ansteuerung von Schließelementen zur Entriegelung, Verriegelung, Öffnung, Schließung und/oder Aktivierung oder Deaktivierung von Fahrzeugöffnungsvorrichtungen. Erfindungsgemäß ist das Schließsystem mit einem ortsauflösenden Ultraschallsensor versehen, der geeignet ist, die Position bzw. die Positionsveränderung eines Objektes zu erfassen und abhängig davon selektiv die Schließelemente zu betätigen.

## Beschreibung

Die Erfindung betrifft ein Schließsystem für ein Fahrzeug zum Entriegeln und/oder Öffnen und/oder Schließen von Öffnungsvorrichtungen von Kraftfahrzeugen, insbesondere Kofferräumen.

Aus der deutschen Patentanmeldung DE 101 29 177 A1 ist ein Schließsystem für ein Fahrzeug bekannt, bei dem Fahrzeugöffnungen automatisch verriegelt, entriegelt, geöffnet oder geschlossen werden. Dabei wird mittels einem niederfrequenten Sende- und Funkempfangssystem eine Annäherung an das Fahrzeug und Identifizierung eines Schlüsselgerätes mit dem Schließsystem erkannt und die Schließelemente nach der Identifizierung angesteuert und die Fahrzeugöffnungen geöffnet.

Weiterhin ist aus dem deutschen Gebrauchsmuster DE 296 23 461 U1 ein System zum freihändigen Entriegeln und/oder Öffnen eines Kraftfahrzeuges bekannt, bei dem mittels Ultraschallsensoren eine Annäherung eines Benutzers an das zu öffnende oder schließende Fahrzeug erkannt wird und mittels bidirektionaler Funkkommunikation der Öffnungs- bzw. Schließvorgang zielgerichtet gesteuert bzw. ausgelöst wird.

Die Verwendung von Ultraschallsensoren als Annäherungssensor insbesondere für die Einparkhilfe und deren Anordnung in Stoßfängern ist im Automobilbereich sehr verbreitet.

Der Erfindung liegt die Aufgabe zugrunde, ein Schließsystem für ein Fahrzeug anzugeben, das ein freihändiges Betätigen des Schließsystems zur Öffnung, Schließung, Entriegelung und Verriegelung bzw. Inbetriebnahme oder Deaktivierung von Schließelementen oder anderen Komponenten des Systems erlaubt und dieses sehr verlässlich und sicher erfolgt.

Diese Aufgabe wird durch ein Schließsystem mit den Merkmalen des Anspruchs 1 gelöst.

Vorteilhafte Weiterbildungen sind Gegenstand der Unteransprüche.

Das erfindungsgemäße Schließsystem für ein Fahrzeug zeigt eine Steuereinheit, die mit Schließelementen verbunden ist und diese zielgerichtet so ansteuert, dass diese Schließelemente eine Öffnung oder Entriegelung bzw. Verriegelung oder ein Schließen bzw. ein Deaktivieren oder Aktivieren der Fahrzeugöffnungsvorrichtungen insbesondere des Kofferraumdeckels bewirken. Mithilfe eines Ultraschallsensors, der mit der Steuereinheit verbunden ist und der nicht nur das Vorhandensein eines Objektes in der Nähe des Fahrzeuges identifiziert, sondern darüber hinaus geeignet ist, den Ort /die Position des Objektes innerhalb des Erfassungsbereiches des Ultraschallsensors zu erfassen und abhängig von dem Ort /der Position differenzierte Signale an die Steuereinheit zu geben. Abhängig von diesen ortsabhängig differenzierten Sensorsignalen, wird die Steuereinheit die Schließelemente des Schließsystems eines Fahrzeuges zielgerichtet betätigt.

Beispielsweise wird das Schließelement, das für das automatische Öffnen des Kofferraumdeckels zuständig ist, erst dann durch die Steuereinheit so angesteuert, dass der Kofferraumdeckel geöffnet wird, wenn beispielsweise der Benutzer des Fahrzeuges mit seiner Hand nicht nur in den Erfassungsbereich des Ultraschallsensors gerät, sondern in einen ganz bestimmten, selektiven Bereich des Erfassungsbereiches des ortsauflösenden Ultraschallsensors. Befindet sich das Objekt nicht in diesem eng begrenzten Ortsbereich, so wird das Schließelement nicht betätigt und die automatische Öffnung des Kofferraumdeckels findet nicht statt. Ergänzend kann das Sensorsignal zusätzlich davon abhängen, dass andere Bereiche des Erfassungsbereiches des ortsauflösenden Ultraschallsensors gerade kein Signal bewirken, so dass die Sicherheit für ein berechtigtes automatisches Öffnen des Kofferraumdeckels in besonderem Maße sowohl von dem Vorhandensein eines Objektes in einem bestimmten Bereich des Erfassungsbereiches und zeitgleich, also kumulativ, das Nichtvorhandensein eines Objektes in einem anderen Bereich des Erfassungsbereichs des ortsauflösenden Ultraschallsensors erforderlich ist.

Durch das ortsabhängige differenzierte Ansteuern der Schließelemente durch die Steuereinheit wird es einerseits ermöglicht, sehr verlässlich und sicher die Schließelemente eines Kraftfahrzeuges zu betätigen, ohne dass ein mühseliges Einführen eines Schlüssels in ein Schloss oder das Auffinden eines Schlüssels oder eines Funkgerätes zur Öffnung des Fahrzeuges notwendig ist. Allein das Wissen, welche Position im Erfassungsbereich eines ortsauflösenden Ultraschallsensors eine bestimmte Betätigung eines Schließelementes beispielsweise zum automatischen Öffnen des Kofferraumdeckels oder des Verriegelns der Türen bewirkt, ist erforderlich, um das erfindungsgemäße Schließsystem verlässlich und sicher zu betätigen. Dies führt zu einem sehr komfortablen Betätigen des Schließsystems eines Fahrzeuges.

Als besonders vorteilhaft hat es sich erwiesen, dass nicht nur differenziert nach dem aktuellen Ort im Erfassungsbereich des Ultraschallsensors die Schließelemente selektiv bzw. differenziert angesteuert werden, sondern dass alternativ oder ergänzend mittels des ortsauflösenden Ultraschallsensors eine Veränderung des Objektes, sei es z.B. in der Größe oder in der Lage des Objektes erfasst wird und abhängig von der erfassten Veränderung die Schließelemente differenziert angesteuert werden. Dabei kann die erfasste Veränderung des Objektes beispielsweise durch eine Veränderung der Gestalt oder eine Veränderung der Größe oder auch in einer Veränderung des aktuellen Ortes oder in einer Kombination davon begründet sein und durch den ortsauflösenden Ultraschallsensor erfasst werden. Dabei können diese Veränderungen entweder in der Steuereinheit oder im Ultraschallsensor selbst oder in beiden gemeinsam durch Auswertung der erfassten Ultraschallsensorsignale bestimmt werden. Dabei kann die Veränderung des Objektes unabhängig oder in Kombination mit der Ortsbestimmung des Objektes zu einem selektiven Ansteuern des oder der Schließelemente durch die Steuereinheit führen.

Beispielsweise kann nun durch diese besondere erfindungsgemäße Weiterbildung ein Öffnen der Hand des Benutzers erfasst werden bzw. das gezielte Vergrößern der Hand insbesondere in einem bestimmten Bereich des Erfassungsbereiches des Ultraschallsensors detektiert werden und als das spezifische Signal zur Entriegelung des Fahrzeuges mit Hilfe der Schließelemente interpretiert werden. Bei Verwendung eines hochauflösenden Ultraschallsensors ist es auch möglich, das Ausstrecken einzelner Finger zu identifizieren und dadurch beispielsweise ein Öffnungssignal dadurch zu realisieren, dass der Benutzer von seiner Hand eine bestimmte Anzahl an Fingern beispielsweise drei Finger ausstreckt.

Als besonders vorteilhaft hat es sich erwiesen, ein bestimmtes Bewegungsmuster des zu erfassenden Objektes beispielsweise der Hand des Benutzers als Kriterium für das Ansteuern der Schließelemente zu verwenden. Dabei hat sich insbesondere ein laterales hin und her bewegen in dem Erfassungsbereich des ortsauflösenden Sensors bewährt. Durch diese einfache und sehr selektive Bewegung, die von einem Passanten nicht oder nur schwer wahrgenommen werden kann, lässt sich ein sehr wirksames, komfortables und sicheres Schließsystem für ein Fahrzeug realisieren.

Es hat sich als besonders vorteilhaft erwiesen, dass das Objekt, mit dessen Hilfe das Schließsystem zielgerichtet angesprochen werden soll, mittels des Ultraschallsensors nicht nur bezüglich seiner Lage im Erfassungsbereich bzw. hinsichtlich seiner Veränderung erfasst wird, sondern anhand seiner Gestalt, Ausdehnung identifiziert wird und abhängig von der Identifizierung die Schließelemente durch die Steuereinheit zielgerichtet betätigt werden. Dabei erfolgt die Identifizierung insbesondere durch einen Mustervergleich der Sensordaten mit Referenzmustern, die insbesondere in dem Ultraschallsensor selbst hinterlegt sind. Entsprechen die erfassten, durch den Ultraschallsensor generierten Sensorsignale den Referenzdaten so wird das in den Erfassungsbereich gelangte Objekt als das berechtige Objekt identifiziert und der Öffnungsmechanismus des Schließsystems und damit die zu betätigenden Schließelemente zielgerichtet durch die Steuereinheit angesteuert. Ist die Identifizierung nicht erfolgreich, so wird die Steuereinheit die Schließelemente nicht betätigen. Durch eine Kombination des Erfordernisses einer Identifizierung und einem Erfüllen eines Ortskriteriums bzw. eines Veränderungskriteriums, welche einzeln oder gemeinsam durch den ortsauflösenden Ultraschallsensor erfasst werden können, lässt sich ein sehr sicheres Betätigen der Schließelemente des Schließsystems realisieren.

Auch ist es möglich, dass beim Vorliegen einzelner der drei Kriterien nicht die volle Betätigung der Schließelemente umgesetzt wird, sondern nur eine Teilansteuerung bzw. nur ein Teil der Funktionalitäten des Schließsystems zur Verfügung gestellt werden. Beispielsweise kann bei nicht erfolgter Identifizierung das Öffnen der Türen verhindert werden, wohingegen das Öffnen des Kofferraums durchaus ermöglicht werden kann. Insbesondere hat es sich bewährt, dass die Entriegelung durch die Schließelemente erst nach einer Identifikation oder eines Vorliegens beider Kriterien einerseits des Ortskriteriums und der Veränderungskriteriums erfolgt wohingegen das automatische Öffnen nach erfolgter Entriegelung bereits durch das alleinige Erfüllen eines Ortskriteriums durch die Steuereinheit realisiert wird. Durch diese besondere Ausbildung ist es möglich, die unterschiedlichen Arten der Betätigung der Schließelemente, d. h. beispielsweise das automatische Öffnen oder Schließen und / oder das Entriegeln oder Verriegeln und / oder das Aktivieren oder Deaktivieren von Schließelementen sehr differenziert abhängig vom Vorliegen unterschiedlicher Kriterien bzw. Kombination von Kriterien, welche ortsabhängig, veränderungsabhängig und / oder identifikationsabhängig realisiert sind, zu machen. Durch diese Ausbildung des Schließsystems lässt sich ein sehr differenziertes Verhalten des Schließsystems realisieren, welche sich durch seine besonders komfortable Ausbildung und seine besondere Sicherheit auszeichnet.

Es hat sich als besonders vorteilhaft erwiesen, nicht nur einen einzigen Ultraschallsensor zu verwenden, sondern den Ultraschallsensor aus mehreren Ultraschallsensorelementen zusammen zu setzen, die gemeinsam ein Sensornetzwerk bilden.

Dabei können die Ultraschallsensorelemente sehr einfach ausgebildet sein und für sich allein keine ortsauflösenden Eigenschaften benötigen. Durch die mehrfache und gemeinsame Verwendung solch einfacher Ultraschallsensorelemente ohne Ortsauflösung, d. h. solche Sensoren, die allein das Vorhandensein eines Objektes in dem Erfassungsbereich detektieren, ohne dass eine differenzierte Aussage zu dem Ort innerhalb des Erfassungsbereiches gegeben ist, ermöglicht durch das Zusammenwirken und das integrierte Auswerten der verschiedenen Ultraschallsensorelementsignale ein ortsauflösendes Sensorsignal, das zur Grundlage der differenzierten Ansteuerung der Schließelemente verwendet werden kann.

Als besonders vorteilhaft hat es sich erwiesen, die Ultraschallsensorelemente so anzuordnen, dass deren jeweiligen Erfassungsbereiche aneinander stoßen bzw. sich überlappen. Gerade durch die Überlappungsbereiche ist eine zusätzliche Auflösung bzw. eine zusätzlich differenzierte Information über den Ort erreichbar. Dies führt zu einen sehr kostengünstigen und gut zu integrierenden Ultraschallsensor für ein erfindungsgemäßes Schließsystem für ein Fahrzeug.

Dabei hat es sich besonders bewährt, die in einem Fahrzeug vorhandenen Ultraschallannäherungssensoren einer Einparkhilfe, welche typischerweise in den Stoßfängern eines Fahrzeugs und über diese Stoßfänger verteilt angeordnet sind, zu verwenden und ihnen hierdurch eine zweite Funktionalität neben der Einparkhilfe zu geben. Durch diese integrative Ausbildung einer Einparkhilfe mit Schließsystem lassen sich die Kosten und die Probleme der bei der Integration der Ultraschallsensorelemente weiter reduzieren und dadurch ein besonders geeignetes Schließsystem für ein Fahrzeug schaffen.

Es hat sich besonders bewährt, die Ultraschallsensoren so zu wählen, dass sie in einem Frequenzbereich von unter 40 kHz insbesondere bei etwa 30 kHz arbeiten. Durch diese besondere Wahl der Ultraschallsensoren bzw. des Frequenzbereiches der Ultraschallsensoren gelingt es, die Einwirkung von Feuchtigkeit insbesondere Wassertropfen und damit die Störempfindlichkeit der Ultraschallsensoren für Schließsysteme deutlich zu verbessern, was zu einer besonders verlässlichen Steuerung der Schließelemente und damit zu einem besonders verlässlichen Schließsystem führt.

Auch hat es sich besonders bewährt, den Ultraschallsensor nicht nach dem Schallimpuls- sondern nach der CW-Doppler-Methode zu betreiben und dadurch beispielsweise eine Veränderung der Position des erfassten Objektes durch eine Frequenzvergrößerung oder Frequenzverkleinerung zu erfassen. Durch diese gewählte Betriebsart gelingt es, eine sehr verlässliche Aussage über die Ortsveränderungen respektive die Geschwindigkeit der Ortsveränderung eines erfassten Objektes zu bekommen, da die Frequenzveränderungen sehr selektiv bestimmt werden können und damit eine sehr verlässliche Information erzeugen, die zur Grundlage einer Ansteuerung der Schließelemente verwendet werden können.

Neben der CW-Doppler-Methode hat sich auch die Schallimpulsmethode bewährt, die sehr kostengünstig realisiert werden kann und dadurch insbesondere für die Verwendung im Rahmen eines Sensornetzwerkes aus einer Mehrzahl bzw. Vielzahl von Ultraschallsensorelementen besonders geeignet ist.

Es hat sich als sehr vorteilhaft erwiesen, dass die Steuereinheit mit dem Fahrzeug insbesondere mit dem CAN-Bus des Fahrzeuges dahingehend verbunden ist, dass eine Information zur Fahrgeschwindigkeit der Steuereinheit zugeführt wird. Anhand der zugeführten Fahrzeuggeschwindigkeit wird dann das Schließsystem bei der Überschreitung einer sehr niedrigen Grenzgeschwindigkeit von einigen Kilometern pro Stunde insbesondere von 5 km/h deaktiviert und bei der Unterschreitung dieser Grenzgeschwindigkeit wieder aktiviert. Hierdurch gelingt es, das Schließsystem in den relevanten Situationen, die öffnungs- oder schließrelevant sind, zielgerichtet aktiv zu haben und in den Situationen, die nicht relevant sind, das Schließsystem zu deaktivieren. Dabei kann die Deaktivierung vollständig oder in der Art eines Schlafmodus, d. h. einer teilweisen Deaktivierung, erfolgen. Durch diese Ausbildung des Schließsystems gelingt es, den Ruhestrom des Sicherheitssystems zu reduzieren und die Sicherheit insbesondere hinsichtlich eines ungewünschten automatischen Öffnens beispielsweise des Kofferraumdeckels während der Fahrt weitgehend zu vermeiden. Dabei hat sich eine Grenzgeschwindigkeit im Bereich von 5 km/h besonders bewährt.

Ein besonders sicheres, verlässliches Schließsystem wurde dadurch geschaffen, dass die Steuereinheit zusätzlich mit einem Funkempfänger verbunden ist, über welchen ein weiteres Signal insbesondere zur Identifizierung des Benutzers des Schließsystems empfangbar ist. Abhängig von diesem funkübertragenen Identifizierungssignal wird dann durch kumulative Betrachtung mit den Ultraschallsensorsignalen durch die Steuereinheit eine Entscheidung getroffen, ob das oder die Schließelemente des erfindungsgemäßen Schließsystems für ein Fahrzeug betätigt oder nicht betätigt werden. Durch die Notwendigkeit des kumulativen Vorliegens sowohl des einen bestimmten funkübertragenen Signals wie auch des Vorhandenseins bestimmter Ultraschallsignale kann die Sicherheit vor unberechtigtem Betätigen des Schließsystems weiter erhöht. Dabei kann das zusätzliche Funksignal ein sehr einfaches Funksignal beispielsweise einer Transpondereinheit ohne aufwendige rolling-codes sein. Diese Ausbildung des Schließsystems ermöglicht es weiterhin, das System freihändig ohne das Suchen oder Betätigen eines speziellen Funkgerätes oder Schlüssels für ein Funkgerät zu betätigen. Damit ist ein sehr sicheres und komfortables Schließsystem gegeben.

Es hat sich als sehr vorteilhaft erwiesen, den Ultraschallsensor in einer Fahrzeugmulde anzuordnen, da gerade in den Fahrzeugmulden ein Schutz vor Verschmutzung beispielsweise durch Regen oder Schnee besonders gegeben ist. Dabei hat sich als einer der bevorzugten Anbringungsorte der obere Teil der Mulde, in der das Nummernschild des Fahrzeugs befestigt ist, herausgestellt. Dabei ist der Ultraschallsensor in der Nähe der Nummernschildbeleuchtung, welche oberhalb des Nummernschildes angeordnet ist, befestigt und vorzugsweise so ausgerichtet, dass der Ultraschallstrahl sich hauptsächlich von oben nach unten gerichtet ist. Dabei wird die Sende/Empfangskeule des Ultraschallsensors der Einbausituation vorzugsweise dahingehend angepasst, dass eine Empfangskeule bzw. Sendekeule verwendet wird, die in Richtung der Fahrzeugbreite breit und in Richtung der Fahrzeuglänge schmal ausgebildet ist. Durch diese Anordnung des Ultraschallsensors ist eine sehr verlässliche, und vor etwaigen Störungen gesicherte Ausbildung des Schließsystems gegeben. Neben der Mulde für das Kraftfahrzeugkennzeichen, haben sich auch die Mulden für die Fahrzeuggriffe besonders bewährt. Auch diese zeigen vergleichbare Vorteile.

Es hat sich weiterhin als sehr vorteilhaft erwiesen, das Schließsystem mit einer Wake-up-Vorrichtung zu versehen, die bei der Detektion eines auslösenden Objektes oder Ereignisses das Schließsystem ganz oder teilweise insbesondere deren Ultraschallsensoren und die Steuereinheit aktiviert. Dabei ist die Wake-up-Vorrichtung mit vorzugsweise passiven Sensoren versehen, wie beispielsweise Thermopiles, die auch im quasi stromlosen Zustand geeignet sind, eine Annäherung festzustellen und dann in der Art eines Relays das Schließsystem in Betrieb zu nehmen bzw. unter Spannung zu setzen. Die Thermopiles stellen passive thermische Sensoren dar, welche sehr klein und kompakt ausgebildet sind. Durch die Verwendung einer derartigen Wake-up-Vorrichtung insbesondere mit Thermopiles gelingt es, den Stromverbrauch des Schließsystems deutlich zu reduzieren und die Funktion des Schließsystems auch unter schwierigen Umständen beispielsweise nach einem langen Stillstand des Fahrzeuges über mehrere Wochen sicher zu gewährleisten.

Weitere Merkmale und Vorteile der Erfindung ergeben sich aus der nachstehenden Figurenbeschreibung. Diese Beschreibung dient nur zur Veranschaulichung und hat keine einschränkende Wirkung. Sie ist unter Bezugnahme auf die beigefügten Zeichnungen zu lesen. Darin zeigen im Einzelnen:
- Fig. 1: eine beispielhafte Anordnung des Ultraschallsensors und
- Fig. 2: eine geschnittene Darstellung einer Öffnungssituation.

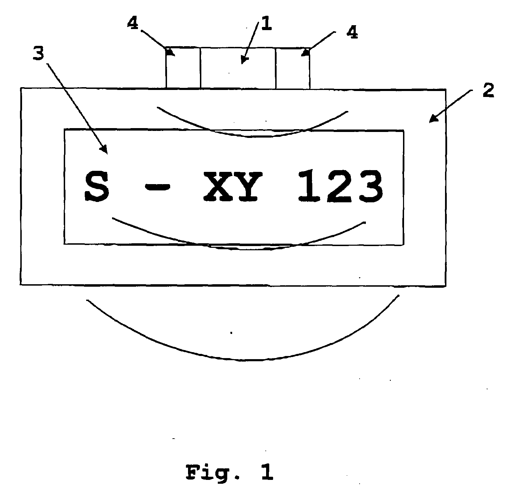

In Fig. 1 ist ein Teil des erfindungsgemäßen Schließsystems für ein Fahrzeug dargestellt. Das erfindungsgemäße Schließsystem besteht aus einem oder mehreren Schließelementen, die mit einer Steuereinheit zur Ansteuerung der Schließelemente zum Betätigen dieser verbunden ist. Darüber hinaus weist das Schließsystem einen ortsauflösenden Ultraschallsensor 1 auf. Dieser ortsauflösende Ultraschallsensor ist in einer Fahrzeugmulde 2 angeordnet, in welcher das Fahrzeugkennzeichen 3 angebracht ist. Oberhalb des Fahrzeugkennzeichens 3 innerhalb der Mulde 2, nahe der Kennzeichenbeleuchtung 4 ist der Sensor 1 so angebracht, dass er in den Bereich hinter dem Fahrzeug Ultraschall ausstrahlt und reflektierte Ultraschallstrahlung empfängt.

Der Erfassungsbereich des Ultraschallsensors 1 ist dabei so ausgebildet, dass er in Richtung der Fahrzeugbreite besonders breit ausgebildet ist. Dagegen ist er in die anderen Richtungen eher schmal ausgebildet. Dadurch ist sichergestellt, dass der Erfassungsbereich einen großen Teil der Fahrzeugbreite umfasst. Der Erfassungsbereich ist dabei so ausgebildet, dass der Sensor die Anwesenheit eines Objektes in dem Erfassungsbereich nicht nur überhaupt erfasst, sondern in der Lage ist, die Position des erfassten Objektes in den gesamten Erfassungsbereich spezifisch zu bestimmen und das Objekt dahingehend zu verfolgen, dass seine Positionsveränderung erfasst wird.

Die durch den Ultraschallsensor 1 erfassten Informationen über ein Objekt werden der Steuereinheit zugeführt, die diese Sensorsignale auswertet. Die Steuereinheit vergleicht dabei nicht nur die Position des erfassten Objektes, sondern auch die Positionsveränderung des erfassten Objektes mit Referenzwerten. Stimmen die Referenzwerte überein, so ist das Erreichen einer bestimmten Position innerhalb des Erfassungsbereiches wie auch das Vorliegen eines bestimmten Bewegungsmusters des Objektes bestätigt, was dazu führt, dass die mit der Steuereinheit verbundenen Schließelemente angesteuert werden und diese die zugehörigen Türöffnungen oder den Kofferraumdeckel entriegeln. Damit kann der durch das bestimmte Bewegungsmuster wie auch das Erreichen einer bestimmten Position innerhalb des Erfassungsbereiches identifizierte Benutzer auf einfache Weise die Fahrzeugtüre öffnen, da sie bereits entriegelt worden ist und das Fahrzeug starten. In entsprechender Weise kann der Fahrzeugbenutzer auch auf die Gegenstände im Kofferraum zugreifen, da durch diese Schließelemente einerseits eine Entriegelung vorgenommen wurde und andererseits ein automatisches Öffnen insbesondere durch einen motorisch oder hydraulisch betriebenen Öffnungsmechanismus mit Hilfe der Schließelemente vorgenommen wurde. Der mit Hilfe des Ultraschallsensors 1 identifizierte, berechtigte Benutzer kann damit quasi freihändig ohne Schlüssel bzw. ohne Betätigung eines Funkgerätes den Kofferraumdeckel öffnen und die Gegenstände, die sich in dem Kofferraum befinden, entnehmen oder andere Gegenstände darin unterbringen.

Damit ist ein sehr komfortables und sicheres Schließsystem für ein Fahrzeug gegeben.

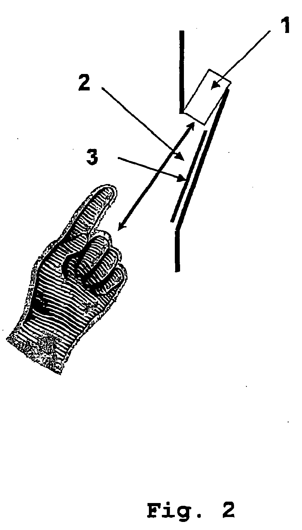

Wie in Fig. 2 dargestellt, ist der Sensor 1 aus der Fig. 1 so angeordnet, dass er in der Mulde 2 des Kraftfahrzeugkennzeichens 3 angeordnet ist. Dabei ist er oberhalb des Kraftfahrzeugkennzeichens 3 angeordnet, wobei er unterhalb eines vorsprungs regengeschützt und verschmutzungsgeschützt angeordnet ist. Er ist dabei so orientiert, dass er Ultraschallsignale von oben nach unten aussendet und in entsprechender Gegenrichtung empfangen kann. Der Ultraschallsensor 1 arbeitet dabei nach dem Schallimpulsverfahren, bei dem der zeitliche Abstand zwischen den ausgesandten und den empfangenen von einem Objekt rückgestreuten Ultraschallsignale ausgewertet wird und dadurch eine Entfernungsinformation gewonnen wird. Darüber hinaus ist der Sensor 1 geeignet, in lateraler Richtung seinen Erfassungsbereich selektiv in Empfangszellen respektive räumliche Zellen aufzuteilen und hierdurch eine Information hinsichtlich der lateralen Position eines Objektes zu erhalten.

Beispielhaft ist die Hand 4 eines Benutzers dargestellt, deren Position relativ zum Sensor 1 durch den Ultraschallsensor 1 erfasst wird. Dabei wird sowohl die laterale Position der Hand 4 wie auch die Entfernung der Hand 4 zum Ultraschallsensor 1 erfasst und dadurch der Ort der Hand 4 bestimmt. Weiterhin wird die Hand 4 kontinuierlich erfasst, d. h. getrackt, so dass das Bewegungsmuster d. h. die zeitliche Positionsveränderung der Hand 4 erfasst wird. Die Position bzw. Positionsveränderungen der Hand werden anschließend mit Referenzmustern verglichen und bei Übereinstimmung bestimmte Schließelemente selektiv betätigt. Ohne Übereinstimmung werden diese Schließelemente durch die Steuereinheit nicht betätigt.

Der Ultraschallsensor 1 arbeitet in einem Frequenzbereich von etwa 30 kHz, wodurch es gelingt, dass einerseits der störende Einfluss von Feuchtigkeit insbesondere Regentropfen im Erfassungsbereich minimiert wird und andererseits der Einfluss anderer Störungen, welche sich typisch in einem Grundrauschen niederschlagen, verringert wird. In diesem Zusammenhang hat es sich auch besonders bewährt, eine Detektionsschwelle vorzusehen, oberhalb derer ein Objekt erst erfasst wird.

## Patentansprüche

1. Schließsystem für ein Fahrzeug mit einer Steuereinheit zur Ansteuerung von Schließelementen und mit einem Ultraschallsensor, der mit der Steuereinheit verbunden ist,
**dadurch gekennzeichnet,**
**dass** der Ultraschallsensor als ortsauflösender Ultraschallsensor (1) ausgebildet ist und die Steuereinheit so ausgebildet ist, dass sie ortsabhängig die Schließelemente durch Ansteuern betätigt.

2. Schließsystem für ein Fahrzeug nach Anspruch 1,
**dadurch gekennzeichnet,**
**dass** mittels des Ultraschallsensors (1) eine Veränderung eines Objektes insbesondere eine Ortsveränderung des Objektes erfasst wird und abhängig von der erfassten Veränderung die Schließelemente durch die Steuereinheit betätigt werden.

3. Schließsystem für ein Fahrzeug nach Anspruch 1 oder 2,
**dadurch gekennzeichnet,**
**dass** mittels des Ultraschallsensors (1) ein Objekt identifiziert und abhängig von der Identifizierung die Schließelemente durch die Steuereinheit betätigt werden.

4. Schließsystem für ein Fahrzeug nach einem der vorstehenden Ansprüche,
**dadurch gekennzeichnet,**
**dass** der Ultraschallsensor (1) aus mehreren zu einem Sensornetzwerk verbundenen Ultraschalsensorelementen gebildet wird.

5. Schließsystem für ein Fahrzeug nach einem der vorstehenden Ansprüche,
**dadurch gekennzeichnet,**
**dass** der Ultraschallsensor (1) in einem Frequenzbereich von unter 40 kHz insbesondere bei etwa 30 kHz.

6. Schließsystem für ein Fahrzeug nach einem der vorstehenden Ansprüche,
**dadurch gekennzeichnet,**
**dass** der Ultraschallsensor (1) in einer Fahrzeugmulde insbesondere in der Mulde 2) eines Nummernschildes (3) oder eines Türgriffes angeordnet ist.

7. Schließsystem für ein Fahrzeug nach einem der vorstehenden Ansprüche,
**dadurch gekennzeichnet,**
**dass** der Ultraschallsensor (1) nach der CW-Doppler-Methode arbeitet.

8. Schließsystem für ein Fahrzeug nach einem der vorstehenden Ansprüche,
**dadurch gekennzeichnet,**
**dass** die Steuereinheit die Steuereinrichtung deaktiviert wenn das Fahrzeug eine Geschwindigkeit von mehreren ins von 5 km/h überschreitet und darunter die Steuereinrichtung aktiviert.

9. Schließsystem für ein Fahrzeug nach einem der vorstehenden Ansprüche,
**dadurch gekennzeichnet,**
**dass** die Steuereinheit mit einem Funkempfänger verbunden ist, über welchen ein weiteres Sensorssignal insbesondere zur Identifizierung empfangbar ist und abhängig davon die Schließelemente durch die Steuereinheit betätigt werden.

10. Schließsystem für ein Fahrzeug nach einem der vorstehenden Ansprüche,
**dadurch gekennzeichnet,**
**dass** ortsabhängig und/oder abhängig von der Art oder dem Maß der Veränderung des erfassten Objektes und/oder abhängig von einer Identifizierung die Schließelemente durch Ansteuern unterschiedlich betätigt werden.

11. Schließsystem für ein Fahrzeug nach einem der vorstehenden Ansprüche,
**dadurch gekennzeichnet,**
**dass** eine Wake-up-Vorrichtung vorgesehen ist, welche geeignet ist, deaktivierte Komponenten des Schließsystems im Bedarfsfall zu aktivieren, wobei die Wake-up-Vorrichtung insbesondere passive Sensoren, insbesondere Thermopiles, zur Detektion der Anwesenheit eines Objektes oder eines Ereignisses aufweist.
